Europäisches Patentamt

**European Patent Office**

Office européen des brevets

(11) Publication number: **0 381 668 B1**

# EUROPEAN PATENT SPECIFICATION

(45) Date of publication of patent specification: **29.12.93**  (51) Int. Cl.⁵: **G03B 27/73**

(21) Application number: **88900901.5**

(22) Date of filing: **01.10.87**

(86) International application number:
**PCT/US87/02531**

(87) International publication number:
**WO 89/03062 (06.04.89 89/08)**

(54) **SYSTEM FOR CALIBRATION AND CONTROL OF A PHOTOGRAPHIC COLOR PRINTER.**

(43) Date of publication of application:
**16.08.90 Bulletin 90/33**

(45) Publication of the grant of the patent:
**29.12.93 Bulletin 93/52**

(84) Designated Contracting States:
**CH DE FR GB LI**

(56) References cited:
**EP-A- 0 119 941      EP-A- 0 159 253**
**WO-A-82/01083      DE-A- 2 911 566**
**US-A- 3 612 683      US-A- 4 174 173**

**Research Disclosure, vol. 177, no. 127, No-**
**vember 1974 (Havant, GB), "Tone correction**
**for color analysers", abstract no. 12727**

(73) Proprietor: **EASTMAN KODAK COMPANY (a**
**New Jersey corporation)**
**343 State Street**
**Rochester New York 14650(US)**

(72) Inventor: **Goodwin, Robert Melvyn**
**c/o Eastman Kodak Co., Patent Dept., 343**
**State St.**
**Rochester, NY 14650(US)**
Inventor: **Cosgrove, Patrick Andre**
**c/o Eastman Kodak Co., Patent Dept., 343**
**State St.**
**Rochester, NY 14650(US)**

(74) Representative: **Lewandowsky, Klaus,**
**Dipl.-Ing. et al**
**Kodak Aktiengesellschaft,**
**Patentabteilung**
**D-70323 Stuttgart (DE)**

## Description

Technical Field

The present invention relates to a system for calibrating and controlling a photographic color printer, and particularly to a computer controlled system which is calibrated on a statistical basis for the spectral response characteristics of the densitometer, exposure control device, photographic print media and processing system which are used to make prints of color negatives.

The invention is especially suitable for use in a high-speed color printer and maintains calibration notwithstanding that tens of thousands of prints per hour can be produced and different types of paper can be used which can be changed from time to time. The invention is generally applicable to photographic printing systems and may be used to provide prints of high quality, reliably over long periods of time.

Background Art

Calibration or set up of color printers which are in use today by photofinishers has been accomplished by a manual adjustment process based upon subjective analysis of prints made with test negatives by skilled personnel. In U.S. patent 4,526,462 issued July 2, 1985 a computer controlled calibration system is proposed which uses prints made from reference negatives which are both overexposed and underexposed and a standard print to obtain a model for color correction which will obtain color balance referenced to the standard print. The use of under and overexposed reference negatives allows the nonlinear density versus exposure time characteristic of the photographic printing paper to be tracked thereby to achieve correction factors of exposure times over a reasonable range of negative densities. In U.S. patent 4,464,045 issued August 7, 1984 a special calibrating negative is used having several steps of different density. Prints made from this wedge are utilized to provide correction factors to provide color balance over a range of densities of a production negative. Inasmuch as the interactions of the densitometer which scans the negatives, the exposure device, the paper and the printing process are not defined and vary from printer to printer, the use of standardized or reference prints to derive correction factors is an empirical process, even using the results of exposures and prints of reference negatives.

Disclosure of Invention

It has been found, in accordance with the invention, that a model of the complex scanner, printer, paper and print processing systems must be statistically based in order to make the control of the exposure (both the intensity of the color components of the illumination and the exposure times) independent of variations in scanners and the effects of different exposure control hardware, photographic paper properties and the development process, as well as their interactions. Through the use of the calibration models obtained in accordance with the invention a transfer density may be used which is dependent upon the negative to be exposed and is independent of the variations in the scanner and the exposure control device, photographic paper and printing process and their interactions. Thus, each negative will produce a standardized result in all printers so calibrated.

The system generates a calibration model for the densitometer of the printer and another calibration model for the photographic system of the printer including the exposure control device, the paper and the processing system. These models are derived by regressions using statistical data obtained from a set of calibration patches. Each patch covers a different level of a different color and neutral. For example in a preferred embodiment a set of seventeen calibration patches is used consisting of three levels (each of a different f-stop, e.g. - 2 , + 2 and + 6) of four color variations and five neutral variations. The color variations, in the preferred embodiment may be green, magenta, sky and tungsten ring (incandescent lamp). The set, thus, represents the entire range of negative densities that are encountered in an average film population. These calibration patches are used to provide all the necessary statistical information by exposing them with different exposures (e.g., a full gamut of offsets) to derive prints from which statistical data can be collected by a densitometer. This statistical data is used in regression based computations to produce the models describing the overall system response. These models are used to translate the transfer densities into signals of value which set the exposure control device (both intensity of color components of the illumination and exposure time) to obtain prints of high quality.

Accordingly, it is the principal object of the present invention to provide an improved system for calibrating and controlling a photographic color printer.

It is a further object of the invention to provide an improved calibration system for a color printer in which the system is modeled on a statistical basis in order to derive correction factors by which transfer densities can be translated into signals for operating an exposure control device to expose the negative, whereby to produce a quality print of standardized print density in each color component thereof.

It is a still further object of the present invention to provide an improved system for calibrating a color printer and to make exposures of negatives independent of the response characteristics of the scanner, exposure control device, photographic paper and photographic processing system which can operate automatically whenever calibration is needed.

Briefly described, the invention may be embodied in a photographic printing system for exposing a printing medium through film negatives with light having color components of different intensity and different exposure times. The printing system has a film densitometer for detecting the density of the negatives and an exposure device for providing light having the color components with different intensities and with different exposure times. The system provided by the invention calibrates the printing system to expose the printing medium through the negatives to provide upon processing of the medium in a processing system prints of desired density irrespective of the variations in density readings and spectral response of the densitometer, the printing medium, the processing system and the exposure device. The calibrating system makes use of a set containing a plurality of negative film patches including a first plurality of patches which vary in neutral density and second pluralities of patches of different color. Each of the second plurality of patches includes a plurality of patches of different density such that the set includes substantially the entire range of negative densities encountered in an average population of color negatives. Means are provided utilizing the patches for deriving a calibration model of the densitometer which emulates the response of the printing medium. Means are also provided utilizing the patches and a plurality of prints made with a different combination of color component intensities of each of the patches for deriving a photographic calibration model which relates the density of the negatives to the density of the prints made by exposing and processing the printing medium. Finally the system includes exposure control means utilizing the densitometer calibration model and the photographic calibration model for controlling the color component intensities and exposure times in the exposure device. Thus, when production negatives are scanned by the densitometer and the calibration models are applied, transfer densities are accurately mapped to the required density on the processed prints independent of the characteristics of the densitometer, exposure device, printing medium and processing system. The transfer densities are translated by the exposure control means into signals for controlling the exposure control device to obtain standard exposure results; for example of densities RGB = 0.8, 0.8, 0.8.

Brief Description of Drawings

The foregoing and other objects features and advantages of the invention as well as a presently preferred embodiment thereof will become more apparent from a reading of the following description in connection with the accompanying drawings in which:

FIG. 1 is a functional block diagram which schematically illustrates a photographic color printer embodying the calibration and control system of the present invention;

FIG. 2 is a schematic diagram illustrating the spatial relationship of the film scanner (densitometer) exposure device and calibration patch as assembled in the system shown in FIG. 1;

FIG. 3 is a block diagram illustrating the interrelationship between the hardware components which provide the system illustrated in the functional block diagram of FIG. 1;

FIG. 4 is a diagram illustrating the structure of the software (computer programs) which are effective in obtaining the functions illustrated in the functional block diagram of FIG. 1;

FIG. 5 is a flow-chart illustrating the program for obtaining the film densitometer calibration model shown in FIG. 4;

FIG. 6 is a flow-chart illustrating the program for obtaining the photographic calibration model shown in FIG. 4;

FIG. 7 is a flow-chart illustrating the program for the photographic calibration regression shown in FIG. 6; and

FIG. 8 is a flow-chart illustrating the use of the exposing device calibration model shown in FIG. 4.

Detailed Description

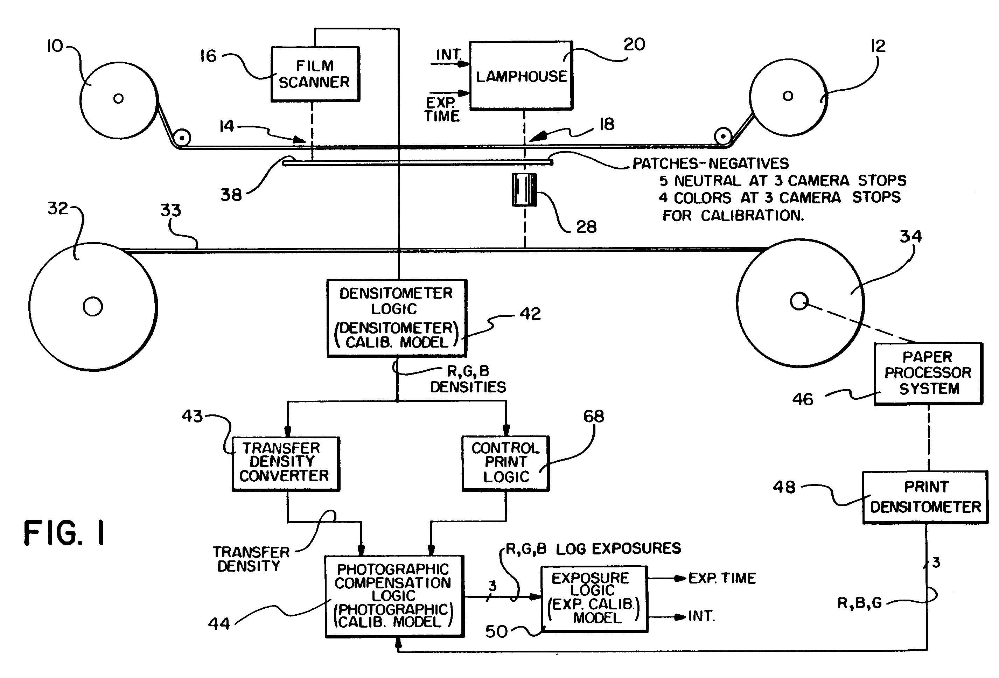

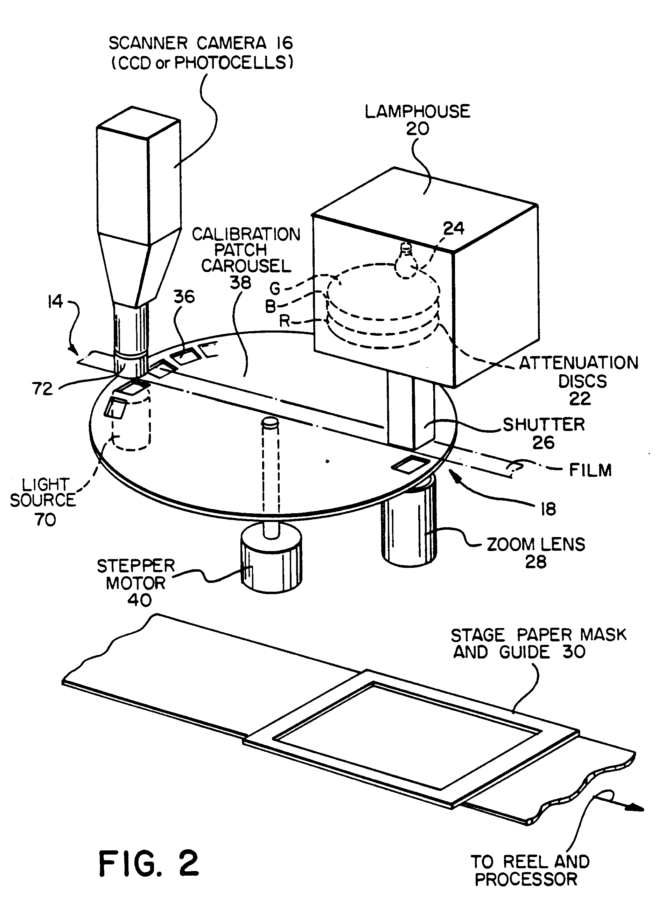

Referring to FIGS. 1 and 2 there is shown, schematically a color printer which provides prints from negatives which are advanced between a supply reel 10 and a takeup reel 12 to a first station 14 where the negative is scanned by a film scanner 16 and thence to a second station 18 where the negative is exposed by an exposing or exposure device, illustrated as a lamphouse 20. The film scanner is a densitometer utilizing a video camera or a matrix array of photocells. A camera having a charge coupled device (CCD) sensor array may also be used. The camera or photocells, suitably of twenty-four rows and thirty-six columns, resolve the scanned negative into a matrix of pixels. The twenty-four by thirty-six matrix contains eight hundred and sixty-four pixels, the film scanner provides a full matrix for each color (RGB) for a total of 2,592 measurements per scanned image.

The lamphouse, as shown schematically in FIG. 2 contains three color attenuation discs 22 which vary the intensity of the color components (RGB) in accordance with their angular positions. The illumination source is one lamp 24 or three lamps, one for each color. The light passing through the discs enters a mixing chamber which is part of the lamphouse and then passes through a shutter/lens assembly 26 at the output of the lamphouse.

The light after passing through the negative at the exposure station 18 is focused by a zoom lens 28 on the printing medium (paper) at a stage 30 containing suitable masks and guides. The paper is reeled between a paper supply reel 32 and a paper takeup reel 34, as shown in FIG. 1.

A plurality, in this embodiment seventeen (17), film negative calibration patches 36 are mounted along a path paralleling the periphery of a carrier disc, indicated as a carousel 38. This carousel is dimensioned such that the patches can be moved to the negative scanning station 14 and to the negative exposure station 18 by rotating the carousel with a stepper motor 40. During production runs, openings in the carousel are in the light path at each station 14 & 18.

In the exposure device 20, the intensity of the color components is varied by intensity control signals which operate motors for rotating the attenuation discs 22. Three such signals may be used. The exposure time is varied by controlling the shutter 26 using an exposure time control signal.

In order to make the film scanning densitometer 16 emulate the response of the photographic paper, densitometer logic 42 is implemented by software to provide a densitometer calibration model. The output of this model is RGB density data as to the densities of the production negatives which are moved between the reels 10 and 12 or of the calibration patches during the calibration or set up of the printer. It will also be appreciated that the system includes motor drives and controls for the negatives and the photographic paper which may be computer controlled. The printer operates under computer control for calibration as well as in the production of prints.

The densitometer data is applied via a transfer density convertor 43 and control print logic 68 to photographic compensation logic 44, also implemented by software, to form a photographic calibration model which processes the RGB density data as well as statistical data made from the calibration patches. This is accomplished through the use of the exposure device 20 and the photographic paper.

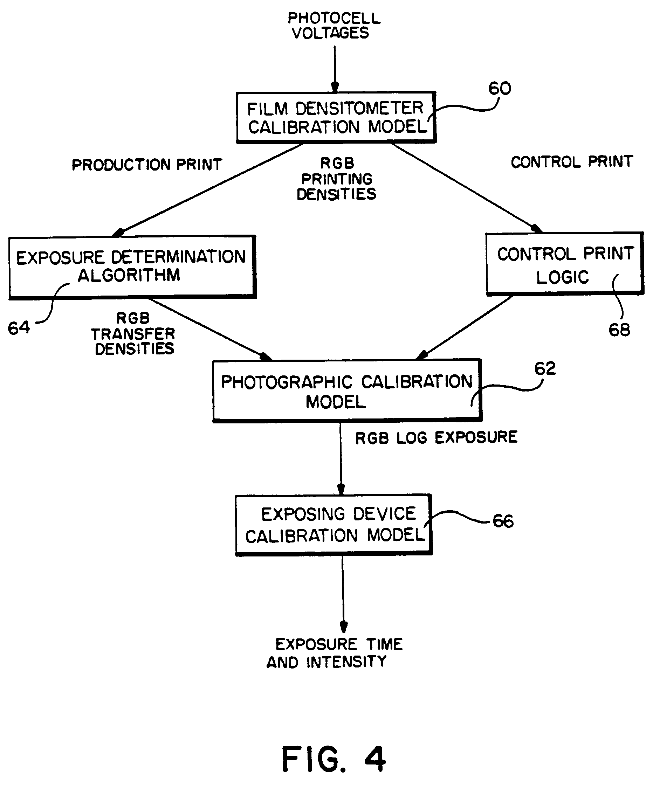

The calibration patches 36 in this embodiment consist of five neutral (N) patches each of different density, made as by being exposed at different camera (f) stops between - 2 and + 6. Suitably these camera stops are - 2, 0, + 2, + 4 and + 6. There are twelve sets of monochromatic patches each of a different color which in this embodiment are green (G), magenta (M), sky (S) and tungsten ring (incandescent lamp illumination) (T) (viz. two sets of orthogonal colors) each at a different print density from - 2 to + 6 f stops. Suitably, these density levels are obtained by exposures of the monochromatic patches at + 2, - 2 and + 6 f stops. This set of orthogonal colors is utilized in a commercially available printer and is illustrated in Fig. 4 of commonly assigned U.S. Patent 4,159,174.

In order to obtain statistically sufficient data, each of these patches is exposed three times with a designed set of exposure offsets. Each set is a different combination of RGB offsets derived using an incomplete three level full factorial design. These may be 0.15 density (on the conventional log density scale). A suitable set of offsets is shown in Table 1 where the exposure offsets indicated by a minus are -.15 density, by a plus, +.15 density and by a 0 (no delta). The size of the offsets are determined by ensuring that the resulting paper density differences are large compared to the error in the paper densitometry, but not so large as to fall in the toe or shoulder of the paper's density vs. log exposure curve.

## TABLE 1

| | Patch ID | R | G | B |
|---|---|---|---|---|
| 1) | -2G | 0 | -1 | -1 |
| 2) | -2M | 0 | 0 | 0 |
| 3) | -2N | -1 | -1 | +1 |
| 4) | -2S | +1 | 0 | +1 |
| 5) | -2T | -1 | -1 | 0 |
| 6) | 0N | +1 | -1 | 0 |
| 7) | +2G | 0 | -1 | +1 |
| 8) | +2M | +1 | -1 | -1 |
| 9) | +2N | -1 | +1 | +1 |
| 10) | +2S | +1 | +1 | 0 |
| 11) | +2T | 0 | +1 | 0 |
| 12) | +4N | -1 | -1 | -1 |
| 13) | +6G | 0 | -1 | 0 |
| 14) | +6M | 0 | +1 | +1 |
| 15) | +6N | -1 | +1 | 0 |
| 16) | +6S | 0 | +1 | -1 |
| 17) | +6T | +1 | +1 | -1 |
| 18) | -2G | +1 | 0 | 0 |
| 19) | -2M | +1 | +1 | +1 |
| 20) | -2N | 0 | 0 | -1 |
| 21) | -2S | -1 | +1 | -1 |
| 22) | -2T | +1 | 0 | -1 |
| 23) | 0N | -1 | 0 | +1 |
| 24) | +2G | -1 | 0 | 0 |
| 25) | +2M | 0 | 0 | +1 |
| 26) | +2N | 0 | -1 | -1 |
| 27) | +2S | -1 | -1 | +1 |
| 28) | +2T | +1 | -1 | +1 |

| 29) | +4N | 0 | 0 | 0 |
|---|---|---|---|---|
| 30) | +6G | +1 | 0 | +1 |
| 31) | +6M | −1 | −1 | 0 |
| 32) | +6N | +1 | −1 | −1 |
| 33) | +6S | +1 | −1 | 0 |
| 34) | +6T | 0 | −1 | +1 |
| 35) | −2G | −1 | +1 | +1 |
| 36) | −2M | −1 | −1 | −1 |
| 37) | −2N | +1 | +1 | 0 |
| 38) | −2S | 0 | −1 | 0 |
| 39) | −2T | 0 | +1 | +1 |
| 40) | 0N | 0 | +1 | −1 |
| 41) | +2G | +1 | +1 | −1 |
| 42) | +2M | −1 | +1 | 0 |
| 43) | +2N | +1 | 0 | 0 |
| 44) | +2S | 0 | 0 | −1 |
| 45) | +2T | −1 | 0 | −1 |
| 46) | +4N | +1 | +1 | +1 |
| 47) | +6G | −1 | +1 | −1 |
| 48) | +6M | +1 | 0 | −1 |
| 49) | +6N | 0 | 0 | +1 |
| 50) | +6S | −1 | 0 | +1 |
| 51) | +6T | −1 | 0 | 0 |

It will be seen from the above table that there are printed three sets of prints for each of the seventeen calibration patches, or a gamut of 51 calibration prints.

After printing, the paper is removed from the takeup reel 34 and processed by the paper processing system 46 (which includes the photographic development chemistry) into the 51 prints. These prints form the basis of obtaining a universe of data from which the photographic calibration model can be derived by mathematical statistical computations. The prints are scanned by a print densitometer 48 to provide RGB densities from each print. The densitometer may be of commercial design and tied into the computer system, which provides the logic 42 and 44, by a data communication link (modem or interface).

The photographic calibration model stores a matrix of coefficients and offsets which use the RGB densities from the densitometer logic 42 to provide RGB log exposures which compensate for the variations both in the scanner 16 and in the photographic system including the processing system (including variations in paper emulsion batches). Therefore, any production negative will be exposed to produce a standard result.

To obtain the intensity signals and exposure time signals from these log exposures, exposure logic 50 processes the log exposure data from the photographic compensation logic 44. The exposure logic contains an exposure calibration model to derive the exposure time and intensity signals which are then used to control the exposure device (lamphouse 20). During production each negative is scanned by the film scanner 16. The matrix of pixel signals is processed by the densitometer calibration model, then by the transfer density convertor 43, and then by the photographic calibration model to provide the RGB log exposure. The exposing device is then set so that when the negative reaches the printing station 18 it will be exposed with the desired exposure both in color intensities and time.

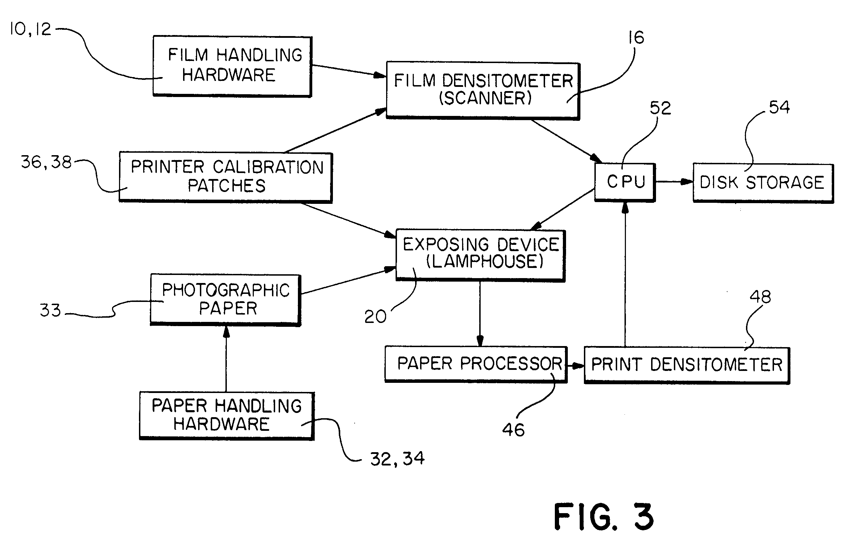

Referring to FIG. 3 there is shown the hardware components of the printer, several of which have been discussed above in connection with FIGS. 1 and 2. The film handling hardware includes the reels 10 and 12 as well as the total mechanisms for moving the film. The paper handling hardware includes the reels 32 and 34 as well as the various mechanisms for handling the photographic paper 33 which is transported between the reels and stops at the printing station 18.

The densitometer logic 42, the photographic compensation logic 44 and the exposure logic 50 are implemented by software in a central processing unit 52. This unit may use disk storage 54 for all of the statistical data obtained from the print densitometer and from the scanner 16 as well as temporary storage for the intermediate calculations which are used in deriving the models. The model coefficients and offsets are also maintained in disk storage 54. A single processor (e.g. a super micro, such as a Motorola 68,000 series microprocessor based computer) or a plurality of computers operating as parallel processor may be used to provide the CPU 52.

FIG. 4 illustrates the structure of the software (computer programs) which is used in the system both in calibration and in making production prints. This includes software (computer program) whereby the film densitometer model 60 is produced. It produces RGB printing densities. These values are then sent through a transfer density convertor 43 which implements an exposure determination algorithm 64 (implemented in the software) which produces transfer densities. This algorithm can be of the type used in the art where neutral and color exposures are automatically calculated as a function of scene content, or it can be as simple as allowing an operator to manually modify the exposure given to a negative based upon the operator's visual evaluation of the scene content. The resulting "transfer density" is a generic exposure that is free of any specific printer characteristics. This transfer density is then fed into the photographic calibration model 62 of the printing system, and translated to an absolute log exposure which does include specific set up and control information. Finally, this absolute log exposure is put through the exposing device calibration model 66 which translates the absolute log exposure to a physical combination of color light intensities and exposure times to produce a good print.

Transfer densities are the equipment independent output of the exposure determination algorithm. When sent to the photographic compensation logic 44 and exposure logic 50, they produce prints of similar quality, regardless of variations in the scanner, exposure device, or in the photographic paper or process.

A photographic calibration model 62 which implements the photographic compensation logic is also implemented by software. The exposure calibration model 66 which implements the exposure logic 50 is also part of the software structure. The control print logic operates on the printing density output of the printing densitometer and provides digital data (the statistical data) which is used in deriving the photographic calibration model. In the case of the normal neutral print the control print logic checks balance or in the case of the gamut prints, it adds the exposure deltas (Table 1).

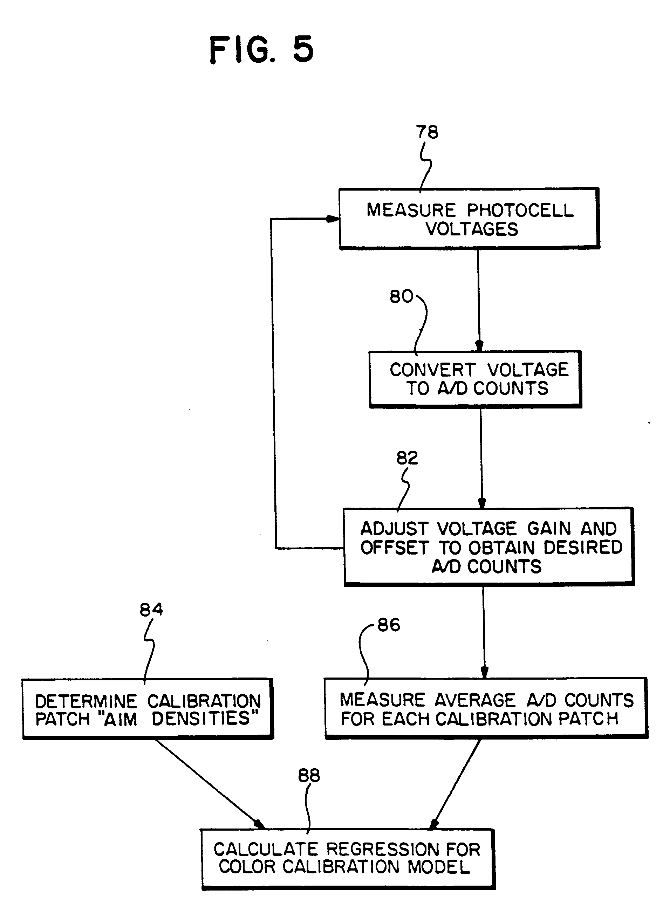

Consider first the film densitometer calibration model program, the flow-chart of which is illustrated in FIG. 5. Referring to FIG. 5, the output of the scanner is assumed to be output from each of the matrix of photocells which defines a pixel of the scanned negative. This is a 24 x 36 matrix which provides 864 outputs per scan. There are three outputs from each photocell (for each pixel) so as to obtain the RGB densities of the film being measured. It will be noted that the scanning densitometer 70 has its own light source and a light conduit (with lenses) to conduct light through the calibration patches 36 and the production negatives. First, using only the scanner and two special filters which are inserted between the light source and the scanner in the location for the calibration patches (on the carousel), the voltages from each photocell are measured. These special filters may be provided by some of the neutral patches. A low density calibration filter and a high density calibration filter are used. Suitable densities for these filters are 0.7 and 2.7. These filters may be Inconel filters because of their spectral neutrality and stability. The measurement determination is indicated at 78.

The measurements are converted into digital values by analog to digital conversion. The outputs are A/D counts. The conversions determination is shown at 80 in FIG. 5. The voltages are measured through variable gain amplifiers, which also have adjustments for offset or bias voltages. Adjustments are made (block 82) to adjust the value of the digital data. The same high and low count is obtained for a given color using the low and high density calibration filters.

Calibration for color is carried out by measuring off line the spectral transmittance of the calibration patches 36 with a spectrophotometer. The resultant transmittance vs. wavelength curve (spectral response) is multiplied by the red, green and blue spectral sensitivity curves of the photographic paper for each calibration patch to obtain data defining three new curves for each patch. The exposing device (the light source 70) average spectral intensity is then used to multiply the data for each of the curves to obtain data for new curves. The area under the new resulting curves is integrated in order to obtain red, green and blue "aim printing densities" for each calibration patch. These aim printing densities are theoretically what the densitometer 16 should measure if the spectral sensitivity of each of the three (RGB) channels of the densitometer 16 exactly matches the spectral sensitivities of the photographic paper. This process is represented by block 84, since it determines the calibration patch aim printing densities.

The average of the digital counts for each color of each calibration patch is then determined in the measurement and A/D process 86. The process also includes averaging the digital counts for each color of each calibration patch. From the aim density data and the average A/D counts for the calibration patches 36, a regression calculation is carried out in the CPU 52 (FIG. 3) to obtain the film densitometer calibration model. This process is indicated at 88 in FIG. 5. The regression computation uses the average digital counts for each color of each patch as the independent variables and the aim densities of each color of each calibration patch as the dependent variables. The regression analysis may include a 17 x 3 matrix. The result using such a matrix is a 3 x 3 matrix of coefficients and a 1 x 3 matrix of offsets. The regression equation is set forth below. The location of the matrix of coefficients and the matrix of offsets is also indicated.

$$A * M + O + \epsilon = P$$

where:

A        is a 17 x 3 matrix of average A/D counts.

M        is the 3 x 3 regression coefficient matrix.

O        is the 1 x 3 matrix of regression offsets.

$\epsilon$        is a 17 x 3 matrix of errors between the calculated values of P and the measured values of P. The sum of the squares of all $\epsilon$ values is minimized.

P        is the 17 x 3 matrix of aim printing densities.

The film densitometer calibration model so obtained is utilized by measuring the photocell voltages of all pixels of all three colors for the film negative being measured. These voltages are then converted to digital counts and transferred to the CPU for calculations. The RGB digital counts for each pixel are multiplied by the 3 x 3 matrix of coefficients, and the 1 x 3 matrix of offsets are added to obtain "printing densities" as shown in FIG. 4. These are the densities that would be measured if the photographic paper were used as the densitometer.

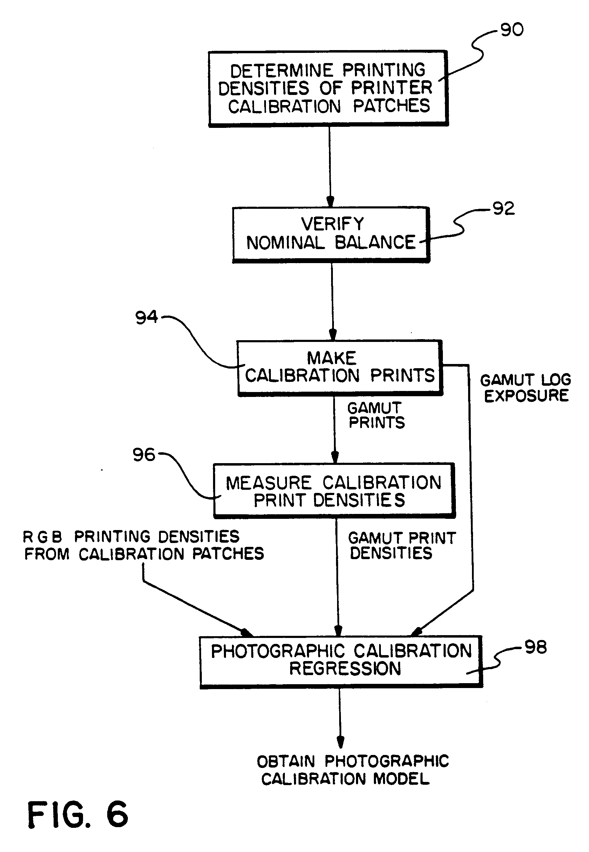

The structure of the program for determining the photographic calibration model is illustrated in FIG. 6. A computational model is obtained for the interactions of the film densitometer and the exposing device 20. The model is fixed and need not be changed as long as the film densitometer model or the exposing device model is changed when a change is made in their respective hardware. A recomputation of the photographic calibration model is called for when the photographic printing paper to be used is of a different type than for the model for which it was originally computed. As a practical matter, if the film densitometer or the exposing device is changed and its respective model is changed to compensate for the physical change, the photographic calibration model may need to be recomputed if there was a large change. A large change can be determined by the results obtained from the system; for example if the print quality changes.

In computing the photographic calibration model, the printing densities of the calibration patches is obtained by using the densitometer 16. This process is indicated at 90 and involves measuring the voltages from all the photocells in the film densitometer, converting to digital counts and applying the film densitometer calibration model. The average of all pixels for each color of each patch is used to obtain the RGB printing densities for each patch. With 17 patches this results in 17 x 3 or 51 averages. The next process is verification of nominal balance 92. This is done to insure that the calibration prints will have densities within a reasonable range, preferably, but not necessarily on the straight line portion of the density vs. log exposure curve for the paper. The normal neutral patch is used for this test. This is the calibration patch that has a printing density closest to the average of a large population of negatives containing normal scenes. The same calibration patches used to determine the film densitometer model may be used, but the aim densities calculated for these patches are not used. It may be desirable to use several carousels with different patches. Special patches for the determination of the densitometer calibration model, may involve the use of the expensive Inconel neutral density filters. Since the carousels containing the photographic model calibration patches are used more frequently they may be interchanged with the carousel containing the patches which are used in obtaining the densitometer calibration model.

In verifying the nominal balance, (90 - FIG. 6) the RGB log exposures are obtained using a nominal photographic calibration model (a certain array of coefficients and offsets). The model developed in a previous calibration may be used, if it is contained in disk storage 54 (FIG. 3). A suitable matrix of coefficients and offsets is given below.

$$\begin{bmatrix} 1 & 0 & 0 \\ 0 & 1 & 0 \\ 0 & 0 & 1 \end{bmatrix} + \begin{bmatrix} Off_r \\ Off_g \\ Off_b \end{bmatrix}$$

Initial offsets are determined by trial and error, if no previous results exist. The values of these offsets will depend on many different parts of the system. If no previous information exists, an identity matrix may be used. This matrix makes no assumptions as to the RGB interactions.

A print is exposed through the normal neutral patch with the exposing device using the RGB log exposures obtained with the nominal photographic calibration model. The print is processed and measured with the print densitometer 48. Outputs are obtained in the RGB channels. These output print densities are compared to certain RGB aim print densities. These aim print densities may arbitrarily be selected, but are desirably chosen to be near the density that most prints of normal scenes will be made. Suitable aim print densities are 0.80, 0.80, and 0.80, for the RGB channels. Based on the differences resulting from the comparison the exposure is adjusted and another print is made until a print close to the desired aim print densities is measured. It may be desirable to calculate the change in exposure for automatically controlling the exposure during verification of nominal balance. For example the slope of the print density vs. log exposure curve for the red, green and blue components can be determined or estimated. The difference between the aim RGB print densities and the actual RGB print densities is determined and then divided by the RGB paper slope to obtain RGB log exposure deltas. These deltas are then added to the original RGB log exposures to obtain the changed exposures which will provide prints more closely approaching the aim print densities.

After nominal balance is verified, the 51 calibration prints are made as indicated at 94 in FIG. 6. These are the gamut prints which are used in calculating the photographic calibration model. These prints are made using the designed offsets to the RGB printing densities of the calibration patches as shown in Table 1 above. The offsets may be obtained by applying the then current photographic calibration model to the RGB printing densities with the offsets added to determine the control input signals to the exposing device 20. If no previous data exists for the system a nominal photographic calibration model is selected as discussed above. The closer the model selected is to the resulting model, the more efficient will be the computations and less iterations will be needed. As noted above, there are three different sets of exposure deltas for each calibration patch, 17 x 3 or 51 calibration prints are made. These are called the gamut prints.

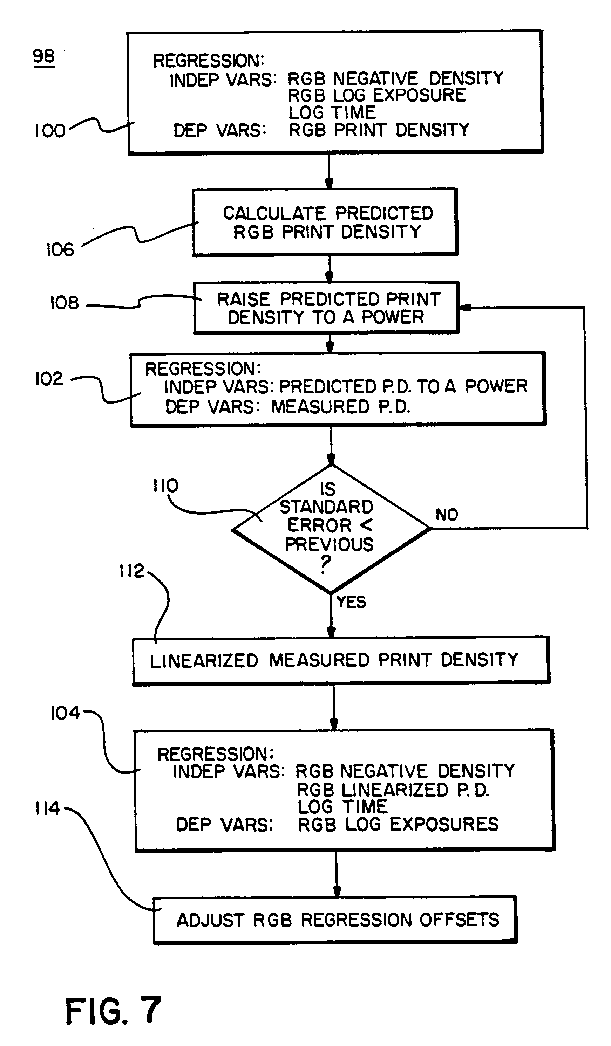

Next, the calibration print densities are measured using the print densitometer 48. This is shown at 96 in FIG. 3. From the RGB printing densities from the calibration patches, the log exposures used in making the calibration prints (gamut log exposures) and the gamut print densities, which constitutes a comprehensive base of statistical information, a regression calculation is performed, as shown at 98 to obtain the photographic calibration model. The program for carrying out this regression calculation is shown in FIG. 7. Multiple regressions are used which are indicated at 100, 102 and 104 in the flow-chart. The first regression 100 is calculated using the RGB printing densities of the calibration patches (without the offsets added), the RGB log exposures and, in the case of a variable exposure time lamphouse as is the case for the shutter equipped lamphouse 20 (FIG. 2), the log of the exposure times, (indicated as log Time) and any other variables relevant to the exposing device or the processing chemistry as the independent variables, and the RGB print densities from the calibration prints as the dependent variables. The regression equation is set forth below. The matrix of coefficients and offsets are indicated in the equation.

$$P * M_P + E * M_E + T * M_T + O + \epsilon = P.D. \qquad (2)$$

where:

P is the 51 x 3 matrix of calibration negative printing densities (17 negative printed 3 times).

$M_P$ is the 3 x 3 matrix of regression coefficients that are multiplied with the calibration negative printing densities.

E is the 51 x 3 matrix of RBG Log Exposures for the calibration prints.

$M_E$ is the 3 x 3 matrix of regression coefficients that are multiplied with the Log Exposures.

T is the 51 x 1 matrix of the log of the exposure time for each of calibration prints.

$M_T$ is a 1 x 3 matrix that is multiplied with the log of the exposure times.

O is the 1 x 3 matrix of regression offsets.

$\epsilon$ is the 51 x 3 matrix of errors between the calculated values of P.D. and the measured values of P.D. The sum of the squares of all $\epsilon$ values is minimized.

P.D. is the 51 x 3 matrix of RBG calibration print densities.

In another computation, 106, the predicted RGB print densities are calculated using the matrix of coefficients and matrix of offsets from the first regression computation 100. In the next three parts of the program, 108, 102, 110 and 112, the RGB print densities which are measured in process 96 in FIG. 6 (the gamut print densities) are linearized. This is done so that the relationship between predicted print density and measured print density is linear. The 3 channels may be linearized separately and the process performed at 108, 102, 110, 112 are performed for each color. First the predicted print density which was calculated at 106 is raised to an arbitrary power. This power can be chosen to be reasonably close to that which is required, as described below. Then, the regression calculation 102 is carried out with the predicted print densities raised to a power as the independent variables (51 x 1 matrix) and the measured print densities for the same color (red, green or blue) as the dependent variables (another 51 x 1 matrix). The regression is iterated using a different power that will reduce the standard error of the regression in step 102 until a standard error minimum is reached as indicated in step 110. This procedure is commonly called non-linear regression. Other methods may be used to linearize the P.D. such as the use of look-up tables. The power and regression slope and offset are saved in storage either in the CPU 52 or disk storage 54 (FIG. 3). The print density for the minimum standard error is calculated in step 112 using the following equation.

$$\text{linearized P.D.} = ((\text{P.D.} - (\text{offset})/\text{slope}))^{1/\text{power}} \qquad (3)$$

In the final regression calculation, 104, the same variables are used as in the first regression 100 except that the dependent variables are switched with certain of the independent variables, and linearized print densities replace the original print densities, as shown in the blocks 100 and 104. In using the RGB calibration patch printing densities, the linearized RGB print densities from step 112 and any other variables relevant to the exposing device such as the log of the exposure time, or process chemistry variables as the independent variables, and the RGB log exposures from step 94 in FIG. 6 as the dependent variables, the regression is calculated. A similar equation as indicated above for the first regression computation 100 is used. The regression provides a model that will predict RGB log exposures from negative densities and desired print densities.

The regression offsets are then adjusted in the final step of the regressions in the calibration computation as indicated at 114. The aim print densities (eg. 0.80, 0.80, 0.80) for the RGB channels are linearized with the RGB slopes (the matrix coefficients), offsets and powers which were saved when the standard error was a minimum. The aim print densities are multiplied by the 3 x 3 part of the matrix obtained during the last regression 104 which contains the coefficients for the linearized print densities. This results in RGB offsets that are added to the RGB regression offsets from the regression computation 104 and adjust these offsets.

Using the photographic calibration model in the photographic compensation logic 44 (FIG. 1), the RGB densities of the production negatives are multiplied by the 3 x 3 part of the matrix from the regression step 104 that contains the coefficients for the calibration patch density as independent variables. Then the adjusted RGB offsets are added to provide the log exposures.

In computing the exposure device calibration model to be used in the exposing device logic 50, an absolute photographic calibration is not necessary. The only requirement is that if a change is made to the exposing device, such as replacing a burned out lamp, the calibration must determine a new model that will achieve the same results as the previous model. This can be achieved by calibrating the shutter to provide a constant known exposure time or a variable calibrated exposure time. The intensity or variable intensity is also calibrated. This is done by using a photometer system with 3 channels (RGB) with spectral sensitivities similar to the spectral sensitivity of the paper being used in the printing system. The intensity of each of the lamps can be varied with the attenuator discs 22 (FIG. 2) and the intensities measured with the RGB photometer system. A table of intensity vs. attenuation disc 22 position is generated for each color.

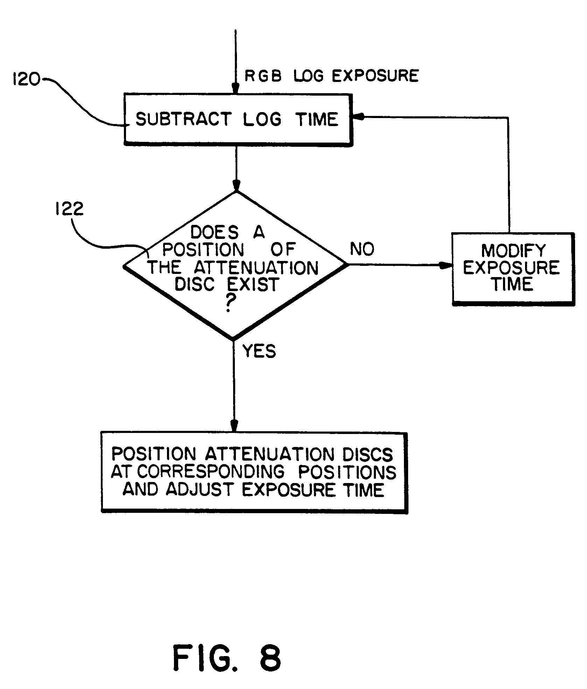

In using the exposing device calibration model (FIG. 8), the RGB log exposures are sent to the exposing device logic. In the first computation 120, the logarithm of the exposure time is subtracted from each log exposure to obtain log intensities. Using the calibration tables generated to look up which position of the attenuator discs 22 provide those log intensities for each color. Iterations of comparisons of log intensities with corresponding disc positions (122) and modification of exposure times are carried out. If one or more of the RGB log intensities is not available in the calibration tables, the exposure time must be adjusted accordingly in such a way that the new log intensities resulting will be available at the attenuator disc positions given in the table. The discs and shutter are set and the negative is exposed.

From the foregoing description it will be apparent that there has been provided an improved system for calibration and control of the exposing device in a photographic color printer. While an exemplary embodiment of the system has been described, variations and modifications thereof, within the scope of the invention, will undoubtedly suggest themselves to those skilled in the art. Accordingly the foregoing description should be taken as illustrative and not in a limiting sense.

**Claims**

1. A method for calibrating a photographic printing system used to provide production prints by exposing a printing medium through film negatives with light having color components of different intensities and/or different exposures times, said system having a film densitometer for detecting the transmission densities of the negatives, an exposure device for providing said light having said color components with different intensities and/or exposure times and exposure control means for automatically controlling the color component intensities and exposure times in said exposure device in response to said detected densities, said calibrating method characterized in that it comprises the steps of:

   (a) providing a set of negative film patches including a plurality of neutral patches each of different density and pluralities of color patches of different colors, each patch of each plurality being of different density and the same color, such that said set covers substantially the entire range of negative densities encountered in an average population of color negatives;

   (b) using measured spectral response data for each patch and spectral response data for said printing medium, developing aim printing density electrical signals which are representative of theoretical densities which would be measured by said film densitometer, if the spectral response of said film densitometer matched the spectral response of said printing medium;

   (c) measuring the transmission densities for each patch using said film densitometer;

   (d) using said measured patch densities and said developed aim printing density signals, developing and storing electrical signals representative of film densitometer calibration parameters relating the response of said paper to the response of said film densitometer;

   (e) exposing said printing medium with said exposure device under control of said exposure control means to provide a gamut of prints made with different combinations of color component intensities of each of said patches;

   (f) measuring the print densities of each print of said gamut of prints;

   (g) using said measured patch densities and said measured print densities, developing and storing electrical signals representative of photographic process calibration parameters relating the density of said patches to the density of said gamut of prints; and

   (h) utilizing said stored electrical signals representative of said film densitometer calibration parameters and said stored electrical signals representative of said photographic process calibration parameters to control the operation of said exposure control means in response to detected densities of film negatives for providing production prints.

2. The method according to claim 1 wherein steps (d) and (e) comprise developing and storing parameter signals for each RGB color component in a film negative, and wherein step (h) comprises processing said film densitometer calibration parameter signals with said photographic process calibration signals to provide RGB log exposure signals to said exposure control means.

3. The method according to claim 1 wherein step (b) comprises developing electrical signals in digital form which are representative of aim printing densities for each RGB color component, step (c) comprises measuring the densities for each patch for deriving digital data for each RGB color component of the patches with the film densitometer, and step (d) comprises manipulating said signals for carrying out a regression computation using said aim printing density signals and densitometer digital data to provide said film densitometer calibration parameters.

4. The method according to claim 3 wherein said regression computation comprises computing the equation

$$A * M + O + \epsilon = P$$

where A is a matrix of said densitometer digital data, M is a regression matrix, O is a matrix of regression offsets, P is a matrix of the aim densities, and $\epsilon$ is a matrix of errors between the calculated values of P, the sum of the squares of all $\epsilon$ values being minimized, and said stored electrical signals representative of said film densitometer calibration parameters are utilized by multiplying digital data for each pixel in a matrix of pixels representing the output of said film densitometer by said matrix of coefficients and adding said matrix of offsets.

5. The method according to claim 1 wherein step (g) for developing said signals representative of photographic process calibration parameters includes manipulating said signals for carrying out a regression computation using electrical signals in digital form representing the densities of the RGB color components of said gamut of prints, densities of the RGB color components of the set of negative film patches, and RGB log exposures used to expose said gamut of prints, to derive signals corresponding to matrices of coefficients and offsets.

6. The method according to claim 5 wherein said regression computation includes computing the equation

$$P * M_P + E * M_E + O + \epsilon = P.D.$$

where P is a matrix of the negative printing densities, $M_P$ is a matrix of regression coefficients which is multiplied with the densities of the negative patches, E is a matrix of the log exposures, $M_E$ is the matrix of regression coefficients that are multiplied with the log exposures, O is a matrix of regression offsets, P.D. is the matrix of print densities obtained from the printer, and $\epsilon$ is a matrix of errors between the calculated values of P.D. and the measured (from the prints) values of P.D., the sum of the squares of all $\epsilon$ values being minimized.

7. The method according to claim 6 wherein step (g) further comprises manipulating said signals for carrying out a computation to linearize P.D.

8. The method according to claim 7 wherein step (g) further comprises manipulating said signals for carrying out another computation using the coefficients (slope) and offsets to linearize P.D. by reiterating the regression using different power until an error minimum is reached by carrying out the equation:

$$\text{linearized P.D.} - ((P.D. - (\text{offset/slope}))^{1/\text{power}}$$

9. the method according to claim 7 wherein step (g) further comprises manipulating said signals for carrying out another regression computation using interchange of certain dependant and independant variables in the equation set forth in claim 6.

10. The method according to claim 8 wherein step (g) further comprises manipulating said signals for carrying out another regression computation using said linearized P.D., to replace the original P.D. and the other variables contained in the equation set forth in claim 6.

11. The method according to claim 1 wherein said patches of different densities are patches of negative film exposed at different f-stops.

12. The method according to claim 11 wherein said pluralities of color patches of different colors comprises pluralities of patches of four different colors.

13. The method according to claim 11 wherein said pluralities of color patches of different colors comprise two sets of patches of orthogonal colors.

14. The method according to claim 11 wherein said combinations of color component intensities in step (e) are obtained by means for exposing said each of said patches with different exposure variations.

**Patentansprüche**

1. Verfahren zum Kalibrieren eines zur serienmäßigen Herstellung von Prints dienenden fotografischen Printsystems, bei dem ein Printmedium durch Filmnegative hindurch mit Licht, das Farbkomponenten unterschiedlicher Intensität aufweist, und/oder mit unterschiedlichen Belichtungszeiten belichtet wird, wobei das Printsystem ein Filmdensitometer zum Ermitteln der Transmissionsdichten der Negative, eine Belichtungsvorrichtung, die das die Farbkomponenten unterschiedlicher Intensität enthaltende Licht und/oder unterschiedliche Belichtungszeiten liefert, sowie eine Belichtungssteuereinrichtung enthält, die die Intensität der Farbkomponenten und die Belichtungszeiten der Belichtungsvorrichtung nach Maßgabe der ermittelten Dichten automatisch steuert, **dadurch gekennzeichnet,** daß es die folgenden Arbeitsschritte umfaßt:

   a) Herstellen eines Satzes von Filmnegativfeldern, der eine Gruppe von neutralen Feldern von jeweils unterschiedlicher Dichte und mehrere Gruppen von Farbfeldern unterschiedlicher Farbe umfaßt, wobei jedes Feld einer jeden Gruppe eine unterschiedliche Dichte und die gleiche Farbe besitzt, derart, daß der Satz im wesentlichen die ganze Bandbreite der in einer durchschnittlichen verarbeitungsmenge von Farbnegativen vorliegenden Negativdichten umfaßt,

   b) Verwendung von für jedes Feld gemessenen Spektralempfindlichkeitsdaten und von Spektralempfindlichkeitsdaten für das Printmedium, wobei elektrische Sollprintdichtesignale erzeugt werden, die die theoretischen Dichten angeben, die von dem Filmdensitometer gemessen würden, wenn die Spektralempfindlichkeit des Filmdensitometers der Spektralempfindlichkeit des Printmediums entsprechen würde,

   c) Messung der Transmissionsdichten für jedes Feld unter Verwendung des Filmdensitometers,

   d) Verwendung der gemessenen Felddichten und der erzeugten Sollprintdichtesignale, womit elektrische Signale erzeugt und gespeichert werden, die den Kalibrierungsparametern des Filmdensitometers entsprechen, die die Empfindlichkeit des Papiers mit der Empfindlichkeit des Filmdensitometers in Beziehung setzen,

   e) Belichtung des Printmediums mittels der Belichtungsvorrichtung und gesteuert durch die Belichtungssteuereinrichtung, um so eine Reihe von Prints mit unterschiedlichen Kombinationen von Farbkomponentenintensitäten von jedem der Felder zu erzeugen,

   f) Messen der Printdichten eines jeden Prints der Printreihe,

   g) Verwendung der gemessenen Felddichten und der gemessenen Printdichten, um elektrische Signale zu erzeugen und zu speichern, die den Kalibrierungsparametern für den fotografischen Prozeß entsprechen, welche die Dichte der Felder mit der Dichte der Printreihe in Beziehung setzen, und

   h) Verwendung der den Kalibrierungsparametern des Filmdensitometers entsprechenden gespeicherten elektrischen Signale und der den Kalibrierungsparametern für den fotografischen Prozeß entsprechenden gespeicherten elektrischen Signale, umdie Arbeit der Belichtungssteuereinrichtung nach Maßgabe der in Filmnegativen festgestellten Dichten so zu steuern, daß Prints serienmäßig herstellbar sind.

2. Verfahren nach Anspruch 1, dadurch gekennzeichnet, daß in den Schritten (d) und (e) Parametersignale für jede RGB-Farbkomponente eines Filmnegativs erzeugt und gespeichert werden und daß in Schritt (h) die Kalibrierungsparametersignale des Filmdensitometers mit den Kalibrierungssignalen für den fotografischen Prozeß so verarbeitet werden, daß logarithmierte RGB-Belichtungssignale an die Belichtungssteuereinrichtung übermittelt werden.

3. Verfahren nach Anspruch 1, dadurch gekennzeichnet, daß im Schritt (b) elektrische Signale in digitaler Form erzeugt werden, die den Sollprintdichten für jede RGB-Farbkomponente entsprechen, daß im Schritt (c) die Dichten eines jeden Feldes gemessen werden, um digitale Daten für jede RGB-Farbkomponente der Felder mit dem Filmdensitometer zu erhalten, und im Schritt (d) die Signale manipuliert werden, um unter Verwendung der Sollprintdichtesignale und der digitalen Densitometerdaten eine Regressionsberechnung durchzuführen und damit die Kalibrierungsparameter des Filmdensitometers zu erhalten.

4. Verfahren nach Anspruch 3, daß die Regressionsberechnung mit Hilfe der Gleichung

$$A * M + O + \epsilon = P$$

vorgenommen wird, in der A eine Matrix aus den digitalen Densitometerdaten, M eine Regressionsmatrix, 0 eine Regressionsausgleichsmatrix, P eine Matrix aus Solldichten und $\epsilon$ eine Matrix aus Abweichungen zwischen den berechneten Werten von P ist, wobei die Summe der Quadrate aller $\epsilon$-Werte minimiert wird, und daß die gespeicherten elektrischen Signale, die den Kalibrierungsparametern des Filmdensitometers entsprechen, verwendet werden, indem digitale Daten für jedes Pixel einer Matrix aus Pixels, die den Ausgang des Filmdensitometers darstellt, mit der Matrix aus Koeffizienten multipliziert und die Ausgleichsmatrix hinzuaddiert wird.

5. Verfahren nach Anspruch 1, dadurch gekennzeichnet, daß bei der Erzeugung der die Kalibrierungsparameter für den fotografischen Prozeß darstellenden Signale gemäß Schritt (g) diese Signale zur Durchführung einer Regressionsberechnung manipuliert werden, wobei elektrische Signale in digitaler Form, die die Dichten der RGB-Farbkomponenten der Printreihe, Dichten der RGB-Farbkomponenten des Satzes von Filmnegativfeldern und logarithmierte RGB-Belichtungswerte für die Belichtung Printreihe darstellen, verwendet werden, um Signale zu erzeugen, die den Koeffizienten- und Ausgleichsmatrices entsprechen.

6. Verfahren nach Anspruch 5, dadurch gekennzeichnet, daß die Regressionsberechnung mit Hilfe der Gleichung

$$P * M_P + E * M_E + 0 + \epsilon = P.D.$$

vorgenommen wird, in der P eine Matrix der Negativ-Printdichten, $M_P$ eine Matrix aus Regressionskoeffizienten, die mit den Dichten der Negativfelder multipliziert wird, E eine Matrix der logarithmierten Belichtungswerte, $M_E$ die Matrix von mit den logarithmierten Belichtungswerten multiplizierten Regressionskoeffizienten, 0 eine Regressionsausgleichsmatrix, P.D. die vom Printer erhaltenen Printdichten und $\epsilon$ eine Matrix aus Abweichungen zwischen den errechneten Werten von P.D. und den (bei den Prints) gemessenen Werten von P.D. sind, wobei die Summe der Quadrate aller $\epsilon$-Werte minimiert wird.

7. Verfahren nach Anspruch 6, dadurch gekennzeichnet, daß in Schritt (g) die Signale derart manipuliert werden, daß eine Berechnung zum Linearisieren der P.D. durchführbar ist.

8. Verfahren nach Anspruch 7, dadurch gekennzeichnet, daß in Schritt (g) die Signale derart manipuliert werden, daß eine weitere Berechnung unter Verwendung der Koeffizienten (Steigung) und Ausgleich zum Linearisieren der P.D. durchführbar ist, indem die Regression mit unterschiedlicher Potenz solange wiederholt wird, bis mit Hilfe der Gleichung:

$$\text{linearisierte P.D.} - (\text{P.D.} - (\text{Ausgleich/Steigung})^{1/\text{Potenz}}$$

ein Fehlerminimum erreicht worden ist.

9. Verfahren nach Anspruch 7, dadurch gekennzeichnet, daß in Schritt (g) die Signale derart manipuliert werden, daß eine weitere Regressionsberechnung durchführbar ist, wobei bestimmte abhängige und unabhängige Variablen in der Gleichung gemäß Anspruch 6 ausgetauscht werden.

10. Verfahren nach Anspruch 8, dadurch gekennnzeichnet, daß in Schritt (g) die Signale derart manipuliert werden, daß eine weitere Regressionsberechnung durchführbar ist, bei der die linearisierten P.D. verwendet werden, um die ursprünglichen P.D. und die anderen in der Gleichung gemäß Anspruch 6 enthaltenen Variablen zu ersetzen.

11. Verfahren nach Anspruch 1, dadurch gekennzeichnet, daß die Felder unterschiedlicher Dichte Filmnegativfelder sind, die mit unterschiedlichen Blendenwerten belichtet wurden.

12. Verfahren nach anspruch 11, dadurch gekennzeichnet, daß die Gruppen von Farbfeldern unterschiedlicher Farben aus Gruppen von Feldern mit vier unterschiedlichen Farben bestehen.

13. Verfahren nach Anspruch 11, dadurch gekennzeichnet, daß die Gruppen von Farbfeldern unterschiedlicher Farbe aus zwei Sätzen von Feldern mit orthogonalen Farben bestehen.

14. Verfahren nach Anspruch 11, dadurch gekennzeichnet, daß die Kombinationen von Farbkomponentenintensitäten gemäß Arbeitsschritt (e) erhalten werden, indem jedes der Felder mit einer anderen Belichtungsvariante belichtet wird.

## Revendications

1. Procédé pour étalonner un système d'impression photographique utilisé pour réaliser des impressions en série au moyen de l'exposition d'un support d'impression à travers des négatifs de film avec une lumière possédant des composantes de couleurs ayant des intensités différentes et/ou des temps d'exposition différents, ledit système comportant un densitomètre de film pour détecter les densités de transmission des négatifs, un dispositif d'exposition pour produire ladite lumière possédant lesdites composantes de couleurs ayant des intensités différentes et/ou des temps d'exposition différents, et des moyens de commande d'exposition pour commander automatiquement les intensités des composantes de couleurs et les temps d'exposition dans ledit dispositif d'exposition, en réponse auxdites densités détectées, ledit procédé d'étalonnage étant caractérisé en ce qu'il comprend les étapes suivantes :

(a) fourniture d'un ensemble de parties de film négatif comprenant une pluralité de parties neutres, ayant toutes des densités différentes, une pluralité de parties colorées ayant des couleurs différentes, chaque partie de chaque pluralité de parties neutres possédant une densité différente et ayant la même couleur, de sorte que ledit ensemble couvre sensiblement toute la gamme des densités de négatifs que l'on rencontre dans une population moyenne de négatifs en couleurs;

(b) utilisation de données mesurées de réponse spectrale pour chaque partie et de données de réponse spectrale pour ledit support d'impression et production de signaux électriques de densité pour l'impression visée, qui sont représentatifs de densités théoriques qui seraient mesurées par ledit densitomètre de film, si la réponse spectrale dudit densitomètre de film était adaptée à la réponse spectrale dudit support d'impression;

(c) mesure des densités de transmission pour chaque partie moyennant l'utilisation dudit densitomètre de film;

(d) utilisation desdites densités de parties mesurées et desdits signaux de densité d'impression visée développés, le développement et la mémorisation de signaux électriques représentatifs de paramètres d'étalonnage du densitomètre de film associant la réponse dudit papier à la réponse dudit densitomètre de film;

(e) l'exposition dudit support d'impression à l'aide dudit dispositif d'exposition sous la commande desdits moyens de commande d'exposition pour obtenir une gamme d'impressions faites avec différentes combinaisons d'intensités de composantes de couleurs de chacune desdites parties;

(f) mesure des densités d'impression de chaque impression de ladite gamme d'impressions;

(g) utilisation desdites densités mesurées de parties et desdites densités d'impression mesurées, développement et mémorisation de signaux électriques représentatifs de paramètres d'étalonnage du processus photographique associant la densité desdites parties à la densité de ladite gamme d'impression; et

(f) utilisation desdits signaux électriques mémorisés représentatifs desdits paramètres d'étalonnage du densitomètre de film et desdits signaux électriques mémorisés, représentatifs desdits paramètres d'étalonnage du processus photographique, pour commander le fonctionnement desdits moyens de commande d'exposition en réponse a des densités détectées de négatifs de film pour l'obtention d'impression en série.

2. Procédé selon la revendication 1, selon lequel les étapes (d) et (e) comprennent le développement et la mémorisation de signaux de paramètres pour chaque composante de couleur RVB dans un négatif de film, et selon lequel l'étape (h) comprend le traitement desdits signaux des paramètres d'étalonnage du densitomètre de film avec lesdits signaux d'étalonnage du processus photographique pour l'envoi de signaux logarithmiques d'exposition RVB auxdits moyens de commande d'exposition.

3. Procédé selon la revendication 1, selon lequel l'étape (b) comprend le développement, sous forme numérique, de signaux électriques, qui sont représentatifs de densités d'impression visée pour chaque composante de couleur RVB, l'étape (c) comprend la mesure des densités pour chaque partie pour l'obtention de données numériques pour chaque composante de couleur RVB des parties à l'aide du densitomètre de film, et l'étape (d) comprend la manipulation desdits signaux pour l'exécution d'un calcul de régression moyennant l'utilisation desdits signaux de densité d'impression visée et desdites données numériques du densitomètre pour l'obtention desdits paramètres d'étalonnage du densitomètre de film.

4. Procédé selon la revendication 3, dans lequel ledit calcul de régression comprend le calcul de l'équation

$$A * M + O + \epsilon = P$$

A étant une matrice desdites données numériques du densitomètre, M une matrice de régression, O une matrice de décalage de régression, P une matrice des densités visées et $\epsilon$ une matrice d'erreurs entre les valeurs calculées de P, la somme des carrés de toutes les valeurs $\epsilon$ étant minimisée, et lesdits signaux électriques mémorisés représentatifs desdits paramètres d'étalonnage du densitomètre de film sont utilisés par multiplication de données numériques pour chaque pixel d'une matrice de pixels représentant la sortie dudit densitomètre de film par ladite matrice de coefficients et l'addition de ladite matrice de décalage.

5. Procédé selon la revendication 1, selon lequel l'étape (g) de développement desdits signaux représentatifs de paramètres d'étalonnage du processus photographique inclut la manipulation desdits signaux pour l'exécution d'un calcul de régression moyennant l'utilisation de signaux électriques sous forme numérique représentant les densités des composantes de couleurs RVB de ladite gamme d'impression, les densités des composantes de couleurs RVB de l'ensemble de parties de pellicules de négatif, et des données d'exposition logarithmiques RVB utilisées pour exposer ladite gamme d'impression pour l'obtention de signaux correspondant à des matrices de coefficients et de décalages.

6. Procédé selon la revendication 5, selon lequel ledit calcul de régression comprend le calcul de l'équation

$$P * M_P + E * M_E + O + \epsilon = P.D.$$

P étant une matrice de densité d'impression de négatif, $M_P$ une matrice de coefficients de régression, qui est multipliée par les densités des parties de négatif, E une matrice des données d'exposition logarithmiques, $M_E$ la matrice des coefficients de régression, qui sont multipliés par les données d'exposition logarithmiques, O une matrice de décalages de régression, P.D. la matrice de densités d'impression obtenue à partir de l'imprimante, et $\epsilon$ une matrice d'erreurs entre les valeurs calculées de P.D. et les valeurs mesurées (à partir des impressions) de P.D., la somme des carrés de toutes les valeurs $\epsilon$ étant minimisée.

7. Procédé selon la revendication 6, selon lequel l'étape (g) comprend en outre la manipulation desdits signaux pour l'exécution d'un calcul visant à linéariser P.D.

8. Procédé selon la revendication 7, selon lequel l'étape (g) comprend en outre la manipulation desdits signaux pour l'exécution d'un autre calcul moyennant l'utilisation des coefficients (pente) et des décalages pour linéariser P.D. en réitérant la régression moyennant l'utilisation d'une puissance différente jusqu'à ce qu'une erreur minimale soit atteinte moyennant l'application de l'équation :

P.D. linéarisée - $((P.D. - (décalage/pente))^{1/puissance}$.

9. Procédé selon la revendication 7, selon lequel l'étape (g) comprend en outre la manipulation desdits signaux pour l'exécution d'un autre calcul de régression moyennant l'utilisation d'un décalage de certaines variables dépendantes et de certaines variables indépendantes dans l'équation indiquée dans la revendication 6.

10. Procédé selon la revendication 8, selon lequel l'étape (g) inclut en outre la manipulation desdits signaux pour l'exécution d'un autre calcul de régression moyennant l'utilisation de ladite P.D. linéarisé, pour remplacer la P.D. initiale et les autres variables contenues dans l'équation indiquée dans la revendication 6.

**11.** Procédé selon la revendication 1, selon lequel lesdites parties ayant des densités différentes sont des parties d'un film négatif exposé avec différents diaphragmes.

**12.** Procédé selon la revendication 11, selon lequel lesdites pluralités de parties colorées ayant des couleurs différentes comprennent des pluralités de parties ayant quatre couleurs différentes.

**13.** Procédé selon la revendication 11, dans lequel lesdites pluralités de parties colorées ayant des couleurs différentes comprennent deux ensembles de parties ayant des couleurs "orthogonales".

**14.** Procédé selon la revendication 11, selon lequel lesdites combinaisons des intensités des composantes de couleurs lors de l'étape (a) sont obtenues au moyen de l'exposition de chacune desdites parties avec différentes variations des compositions.

FIG. I

SCANNER CAMERA 16
(CCD or PHOTOCELLS)

LAMPHOUSE
20

CALIBRATION
PATCH
CAROUSEL
38

24

G
B
R

14

36

72

ATTENUATION
DISCS
22

SHUTTER
26

FILM

18

LIGHT
SOURCE
70

ZOOM LENS
28

STEPPER
MOTOR
40

STAGE PAPER MASK
AND GUIDE 30

# FIG. 2

TO REEL AND
PROCESSOR

FIG. 3

FIG. 4

# FIG. 5

78

```
MEASURE PHOTOCELL
VOLTAGES
```

80

```
CONVERT VOLTAGE
TO A/D COUNTS
```

82

```
ADJUST VOLTAGE GAIN AND
OFFSET TO OBTAIN DESIRED
A/D COUNTS
```

84

```
DETERMINE CALIBRATION
PATCH "AIM DENSITIES"
```

86

```
MEASURE AVERAGE A/D COUNTS
FOR EACH CALIBRATION PATCH
```

88

```
CALCULATE REGRESSION FOR
COLOR CALIBRATION MODEL
```

FIG. 6

EP 0 381 668 B1

**98**

REGRESSION:
INDEP VARS: RGB NEGATIVE DENSITY
RGB LOG EXPOSURE
LOG TIME
DEP VARS: RGB PRINT DENSITY

100

CALCULATE PREDICTED
RGB PRINT DENSITY

106

108 — RAISE PREDICTED PRINT
DENSITY TO A POWER

102

REGRESSION:
INDEP VARS: PREDICTED P.D. TO A POWER
DEP VARS: MEASURED P.D.

110

IS STANDARD ERROR < PREVIOUS ? — NO

112 — YES

LINEARIZED MEASURED PRINT DENSITY

104

REGRESSION:
INDEP VARS: RGB NEGATIVE DENSITY
RGB LINEARIZED P.D.
LOG TIME
DEP VARS: RGB LOG EXPOSURES

114

ADJUST RGB REGRESSION OFFSETS

# FIG. 7

24

120 — SUBTRACT LOG TIME

RGB LOG EXPOSURE

122

DOES A POSITION OF THE ATTENUATION DISC EXIST ?

NO → MODIFY EXPOSURE TIME

YES

POSITION ATTENUATION DISCS AT CORRESPONDING POSITIONS AND ADJUST EXPOSURE TIME

FIG. 8